# FASCICULE DE BREVET EUROPEEN

(11) **EP 2 769 133 B1**
(45) Date de publication et mention de la délivrance du brevet: **21.07.2021**
(21) Numéro de dépôt: 12787786.8
(22) Date de dépôt: 19.10.2012
(51) Int. Cl.: F16L 5/02, F16L 5/10

(54) **PROCÉDÉ ET DISPOSITIF D'ÉTANCHÉISATION D'UN ORIFICE DE PASSAGE DE FLUIDE D'UNE FAÇADE EXTÉRIEURE DE BÂTIMENT**
VERFAHREN UND VORRICHTUNG ZUM ABDICHTEN EINER ÖFFNUNG ZUM DURCHGANG EINER FLÜSSIGKEIT AUF EINER EXTERNEN FASSADE EINES GEBÄUDES
METHOD AND DEVICE FOR SEALING AN OPENING FOR THE PASSAGE OF FLUID ON AN EXTERNAL FAÇADE OF A BUILDING

(30) Priorité: 21.10.2011 FR 1159583
(43) Date de publication de la demande: 27.08.2014
(73) Titulaire: Electricité de France, 75008 Paris (FR)
(72) Inventeur: FOISSAC, Guillaume, F-77250 Veneux Les Sablons (FR); TEUILLIERES, Cédric, F-77133 Fericy (FR); THIBAULT, Philippe, F-75020 Paris (FR)
(74) Mandataire: Plasseraud IP
(86) Numéro de dépôt international: PCT/FR2012/052402
(87) Numéro de publication internationale: WO 2013/057454

(56) Documents cités:
- US-A- 4 194 750
- US-A1- 2004 060 723
- None

## Description

La présente invention est relative à l'étanchéisation d'orifices de passage de fluide dans un bâtiment. US 2004/060723 traite de ce sujet.

Plus particulièrement, l'invention se rapporte à un procédé d'étanchéisation, à un dispositif d'étanchéisation et à un système d'étanchéisation d'un orifice de passage de fluide d'une façade extérieure de bâtiment, ledit orifice étant réalisé entre une partie intérieure et une partie extérieure de bâtiment.

Dans le cadre du développement par exemple de systèmes de pompe à chaleur petite puissance destinés à la rénovation des systèmes de chauffage à effet Joule, un certain nombre d'innovations ont été réalisées afin d'augmenter de façon significative le confort, la compacité, la performance et la mise en œuvre du produit. Il a en particulier été développé un système dit « mono-trou » qui permet de faire passer à travers un seul et même orifice de passage réalisé dans un mur l'aspiration et le refoulement de l'air nécessaire au bon fonctionnement d'une pompe à chaleur.

L'un des problèmes posés par la mise en œuvre de tels systèmes, et plus généralement par la mise en œuvre des nombreuses bouches d'aspiration-soufflage aujourd'hui présentes sur le marché, est lié à l'installation de ces produits depuis l'intérieur du domicile, sans nécessiter de mise en œuvre d'un échafaudage extérieur couteux et contraignant.

En effet, la plupart des produits qui existent aujourd'hui proposent une installation des pompes à chaleur à l'intérieur et une installation des bouches d'aspiration-soufflage par l'extérieur. Ils nécessitent donc, dans le cas de logements en hauteur, une intervention en façade à minima à l'aide d'une échelle, voire à l'aide d'une nacelle ou d'un échafaudage.

En outre, pour des systèmes mis en œuvre exclusivement depuis l'intérieur du domicile, il reste à gérer l'étanchéité mur/conduit.

En effet, une rupture de l'étanchéité de l'installation générale crée une zone d'infiltration d'air de l'extérieur vers l'intérieur du domicile à travers l'orifice de passage, ou encore une infiltration d'eau de ruissellement à l'intérieur de l'orifice. Ceci a pour effet une dégradation progressive du mur. En outre, dans le cadre d'une utilisation de tels produits dans des applications de type pompes à chaleur, il est important d'assurer une pose d'un dispositif de pompe à chaleur en conservant une étanchéité satisfaisante.

La présente invention vient améliorer la situation.

L'invention propose à cet effet un procédé comprenant au moins les étapes :
- prévoir un conduit tubulaire portant sur une de ses extrémités un dispositif d'étanchéité, le dispositif comportant :
   un moyen de raccordement au conduit, ledit moyen de raccordement s'étendant selon une direction longitudinale,
   un organe d'étanchéité,
   et des moyens élastiques intermédiaires entre le moyen de raccordement et l'organe d'étanchéité, les moyens élastiques prolongeant le moyen de raccordement selon ladite direction longitudinale, l'organe d'étanchéité formant, dans une position de repos desdits moyens élastiques, un angle non nul avec un axe général du conduit,
- solliciter les moyens élastiques pour déformer l'inclinaison de l'organe d'étanchéité permettant une introduction de l'organe d'étanchéité dans l'orifice,
- insérer dans ledit orifice, à partir de l'intérieur du bâtiment, le conduit portant ledit dispositif d'étanchéité, l'organe d'étanchéité étant incliné par rapport à sa position de repos pour progresser dans ledit orifice, et
- faire progresser le conduit portant le dispositif dans l'orifice jusqu'à libérer hors de ladite partie extérieure du bâtiment l'organe d'étanchéité, les moyens élastiques rabattant l'organe d'étanchéité dans sa position de repos et assurant un contact entre le conduit et la façade extérieure. Grâce à ces dispositions, une intervention sur la façade extérieure du bâtiment devient superflue. De plus, il est ainsi possible de réaliser un orifice de passage sensiblement aux dimensions du conduit tubulaire.

Dans une réalisation de l'invention, le dispositif peut comporter un talon situé dans le prolongement de l'organe d'étanchéité et le procédé comporte en outre une étape d'insertion d'un deuxième conduit à l'intérieur du premier conduit. Le deuxième conduit est apte ainsi à agir sur le talon précité pour renforcer le contact entre le dispositif et la façade extérieure.

L'action du deuxième conduit sur le talon du dispositif permet alors de s'assurer de l'étanchéité du contact dispositif/façade extérieure par la réalisation d'une action mécanique permettant de créer une force de pression de l'élément d'étanchéité sur la façade extérieure.

Avantageusement, le deuxième conduit comporte des moyens d'assemblage avec le dispositif et le procédé comporte en outre une étape de verrouillage du dispositif par emboitement par complémentarité de forme du deuxième conduit avec le talon du dispositif.

Cette étape de verrouillage permet ainsi de stabiliser le deuxième conduit à l'intérieur du dispositif.

Dans une forme de réalisation, une adaptation de la longueur du premier et du second conduit à l'épaisseur de la façade de bâtiment est réalisée après le verrouillage du deuxième conduit et du talon.

Le procédé est ainsi susceptible d'être mis en œuvre quelque soit l'épaisseur du mur considéré.

Le procédé peut comporter en outre une étape de raccordement dudit dispositif au conduit, en particulier par emmanchement du moyen de raccordement autour du conduit.

Le raccordement du dispositif au conduit est réalisé de façon simple et ne nécessite donc pas d'outillage spécial.

Le procédé peut comporter également une étape finale de fixation du conduit et du dispositif d'étanchéité à l'intérieur de l'orifice de passage réalisée à l'intérieur du bâtiment par l'intermédiaire de moyens de fixation.

L'ensemble composé du dispositif et des deux conduits est ainsi fixé de façon pérenne à l'intérieur de l'orifice de passage.

L'invention peut viser aussi un dispositif pour la mise en œuvre du procédé décrit ci-dessus.

Ainsi l'invention vise en outre un dispositif pour une étanchéisation d'un orifice de passage de fluide d'une façade extérieure de bâtiment, ledit dispositif comprenant un moyen de raccordement à un conduit, ledit moyen de raccordement s'étendant selon une direction longitudinale, un organe d'étanchéité, et des moyens élastiques intermédiaires entre le moyen de raccordement et l'organe d'étanchéité, les moyens élastiques prolongeant le moyen de raccordement selon ladite direction longitudinale, l'organe d'étanchéité formant, dans une position de repos desdits moyens élastiques, un angle non nul avec un axe général du conduit. Les moyens élastiques sont aptes à être sollicités pour déformer l'inclinaison de l'organe d'étanchéité en permettant une introduction de l'organe d'étanchéité dans l'orifice, de sorte que le conduit portant ledit dispositif d'étanchéité est apte à être inséré dans ledit orifice, à partir de l'intérieur du bâtiment, l'organe d'étanchéité étant incliné par rapport à sa position de repos pour progresser dans ledit orifice, et
de sorte que le conduit portant le dispositif est apte à progresser dans l'orifice jusqu'à libérer hors de ladite partie extérieure du bâtiment l'organe d'étanchéité, les moyens élastiques rabattant l'organe d'étanchéité dans sa position de repos et assurant un contact entre le dispositif et la façade extérieure.

Dans un mode de réalisation, le dispositif est de section générale tubulaire, avec une partie intérieure orientée vers l'axe général du dispositif, et l'organe d'étanchéité possède une surface circulaire sensiblement plane s'étendant dans une direction formant un angle non nul avec un axe général du conduit de raccordement à l'opposée de la partie intérieure du dispositif.

La forme du dispositif permet de faciliter son insertion à l'intérieur du conduit.

Avantageusement, le dispositif comporte un talon situé dans le prolongement de l'organe d'étanchéité sur une partie intérieure dudit dispositif.

Le talon ainsi disposé permet lors de l'étape d'insertion d'un deuxième conduit à l'intérieur dudit premier conduit d'assurer l'étanchéité du contact dispositif/façade extérieure.

L'organe d'étanchéité et les moyens élastiques sont réalisés dans un matériau souple de type polymère d'une dureté comprise entre 40 et 80 Shore A, de préférence entre 40 et 70 Shore A.

Cette plage de dureté permet une bonne tenue de l'élément d'étanchéité une fois déployé à l'extérieur du bâtiment et son repliement pour permettre son passage à l'intérieur de l'orifice traversant.

Dans une forme de réalisation, les moyens élastiques comportent sur au moins une surface des cannelures de déformation, ces cannelures assurant la déformation des moyens élastiques.

L'organe d'étanchéité est muni en outre sur une partie périphérique extérieure de sa surface circulaire plane, d'une saillie périphérique de contact avec la façade extérieure de bâtiment.

La saillie permet de renforcer le contact élément d'étanchéité - façade extérieure de bâtiment.

Le dispositif peut comporter un moyen de raccordement au conduit de forme circulaire en un matériau élastique pour venir s'emmancher autour d'un conduit tubulaire.

L'organe d'étanchéité, les moyens de raccordement et les moyens élastiques intermédiaires forment une seule et même pièce.

Ainsi, l'organe d'étanchéité, les moyens de raccordement et les moyens élastiques intermédiaires sont réalisée d'un seul tenant.

L'invention vise également un système pour une étanchéisation d'un orifice de passage de fluide d'une façade extérieure de bâtiment comportant un dispositif d'étanchéisation tel que précédemment décrit et un premier conduit raccordé au dispositif d'étanchéisation par l'intermédiaire de moyens de raccordement.

Dans une réalisation avantageuse, le système comporte en outre un deuxième conduit inséré à l'intérieur dudit premier conduit pour agir sur le talon d'un dispositif d'étanchéisation tel que précédemment décrit.

D'autres caractéristiques et avantages de l'invention apparaîtront à l'examen de la description ci-après d'une de ses formes de réalisation, donnée à titre d'exemple non limitatif, en regard des dessins joints, sur lesquels :
- la figure 1 montre une vue en coupe d'un dispositif d'étanchéité selon l'invention inséré dans un orifice d'une façade de bâtiment,
- la figure 2 montre une vue en coupe de la partie supérieure du dispositif d'étanchéité selon l'invention,
- les figures 3a, 3b, 3c, 3d montrent schématiquement des étapes de mise en œuvre du procédé objet de l'invention, et
- la figure 4 montre une vue de détail du contact dispositif - deuxième conduit après la mise en position dudit deuxième conduit dans le dispositif.

Sur les différentes figures, les mêmes références désignent des éléments identiques ou similaires.

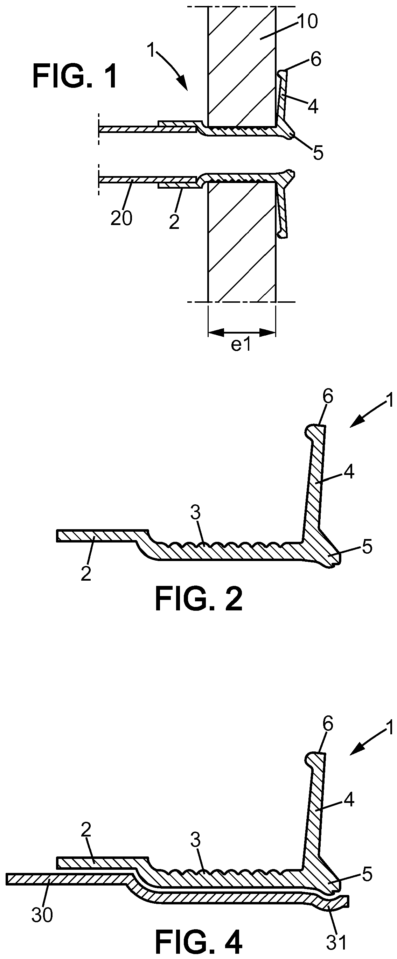

La figure 1 représente une façade de bâtiment 10 d'épaisseur e1. Ladite façade comporte un orifice et un dispositif d'étanchéité 1 inséré en partie dans l'orifice traversant et en partie déployé à l'extérieur de la façade de bâtiment 10, le dispositif d'étanchéité 1 étant relié à un conduit 20. Dans une variante de l'invention, l'orifice de passage a sensiblement les mêmes dimensions que le conduit traversant l'orifice.

Le dispositif est plus précisément composé, en référence maintenant à la figure 2 :
- d'un élément de raccordement 2, qui consiste en un manchon élastique apte à venir s'emmancher autour du conduit 20 auquel le dispositif 1 est raccordé ;
- d'une partie cannelée, qui constitue les moyens élastiques 3, les cannelures assurant la flexibilité du dispositif permettant son insertion au sein de l'orifice et
- d'un organe d'étanchéité 4 en forme de collerette, qui possède une surface circulaire sensiblement plane s'étendant dans une direction formant un angle non nul avec un axe général du conduit de raccordement à l'opposée de la partie intérieure du dispositif.

Plus particulièrement, les moyens élastiques 3 sont intermédiaires entre l'organe d'étanchéité 4 et l'élément de raccordement 2. En d'autres termes, l'élément de raccordement 2 s'étend longitudinalement selon une première direction longitudinale, et les moyens élastiques 3 prolongent l'élément de raccordement selon ladite première direction longitudinale. La première direction longitudinale est avantageusement confondue avec l'axe général du conduit. En outre, l'organe d'étanchéité 4 est également situé dans le prolongement des moyens élastiques 3 dans une direction formant un angle non nul avec un axe général du conduit de raccordement. Ainsi, une collerette d'étanchéité 1 s'étendant sensiblement en longueur est réalisée, ce qui lui assure une facilité de mise en œuvre, aussi bien au niveau de la fabrication que du montage à l'intérieur de l'orifice. En l'espèce, seul l'élément de raccordement est en contact avec le conduit 20.

La surface plane de l'élément d'étanchéité est munie à sa périphérie d'une saillie 6 qui forme le point de contact étanche entre la façade du bâtiment et le dispositif. De plus, un talon 5 est prévu sur une partie intérieure dans le prolongement de l'organe d'étanchéité.

Afin d'assurer une certaine rigidité du dispositif 1, tout en lui conférant un caractère élastique, ledit dispositif, ou au moins ses moyens élastiques 3 et l'organe d'étanchéité 4 sont réalisés en un matériau souple type polymère ayant une dureté comprise de préférence entre 50 et 70 Shore A. La mesure de la dureté Shore est basée sur la déformation d'un ressort en fonction d'un déplacement connu. Elle peut s'effectuer à l'aide d'appareils disponibles dans le commerce.

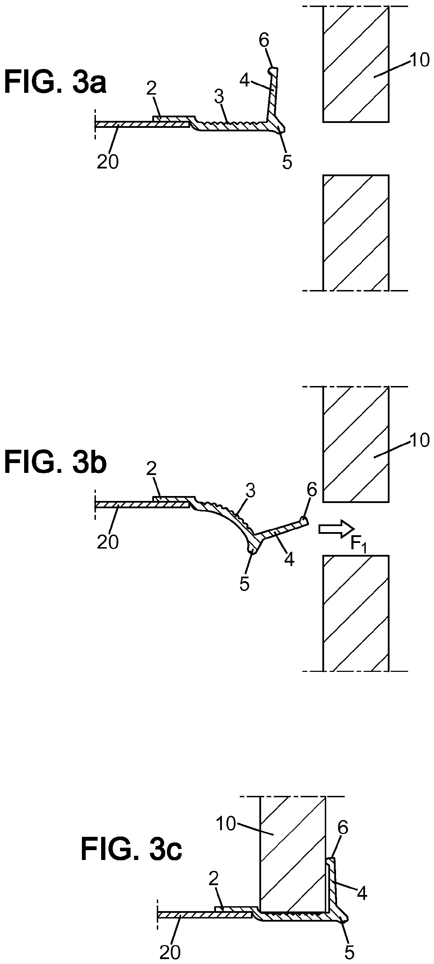

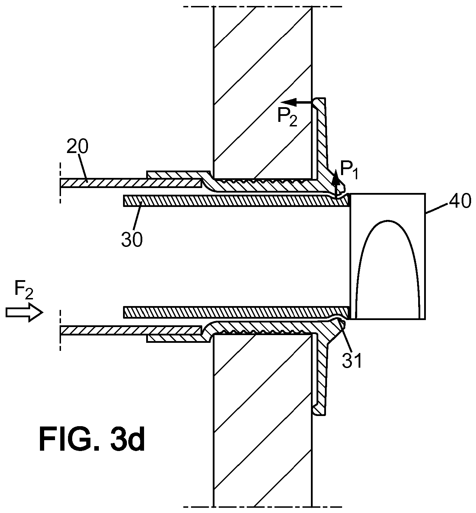

La figure 3 décrit des étapes de réalisation du procédé d'étanchéisation.

La figure 3a représente un dispositif 1 tel que précédemment décrit emmanché sur un conduit 20, par l'intermédiaire de son moyen de raccordement 2, dans un état de non sollicitation, ledit dispositif 1 est encore hors de l'orifice de passage de la façade de bâtiment 10. L'ensemble composé du dispositif d'étanchéisation emmanché sur un conduit forme un système d'étanchéisation.

Dans l'exemple représenté figure 3a, l'organe d'étanchéité s'étend en particulier dans une direction sensiblement perpendiculaire à l'axe général du conduit 20. En règle générale, l'organe d'étanchéité forme, dans une position de repos des moyens élastiques, un angle non nul avec un axe général du conduit (par exemple de 90 degrés, comme représenté sur la figure 3a).

Dans une deuxième étape de procédé, un opérateur sollicite les moyens élastiques afin de les déformer en les repliant vers la partie centrale du conduit 20. Le dispositif est ainsi apte à s'engager à l'intérieur de l'orifice de passage. Cette étape est représentée figure 3b.

Un opérateur fait ensuite progresser le système d'étanchéité à l'intérieur de l'orifice de passage selon un sens de déplacement représenté par la flèche F1 sur la figure 3b, jusqu'à atteindre l'extérieur du bâtiment. En atteignant l'extérieur du bâtiment, les organes élastiques et l'organe d'étanchéité, qui avaient été déformés lors du passage de l'orifice, reviennent en position de repos figure 3c. L'organe d'étanchéité retrouve alors sa forme d'origine en se déployant naturellement et de ce fait recouvre les surfaces de la façade extérieure en contact direct avec l'orifice de passage qui auraient pu être éventuellement détériorées lors de la réalisation dudit orifice dans la façade du bâtiment.

De plus, comme il est possible de le distinguer sur la figure 3c, l'organe d'étanchéité est en contact avec la façade du bâtiment par l'intermédiaire d'une saillie 6 située à la périphérie de l'organe d'étanchéité.

Enfin, afin de renforcer l'étanchéité du contact, un second conduit 30, représenté à titre d'exemple sur la figure 3d avec un déflecteur 40 à son extrémité est introduit à l'intérieur du dispositif 1 ainsi disposé dans l'orifice de passage jusqu'à ce que le talon 5 entre en contact avec des moyens d'assemblage.

Lesdits moyens d'assemblage sont constitués d'une rainure 31 prévue sur le deuxième conduit (cf. figure 4), qui verrouille la position du deuxième conduit 30 par rapport au dispositif 1. Le deuxième conduit 30 exerce par l'intermédiaire du talon 5 situé sur le dispositif une force de poussée P1 sur l'organe d'étanchéité 4.

L'effet levier réalisé par l'organe d'étanchéité transmet ladite force de poussée P1 de manière à engendrer une force de poussée P2 de l'organe d'étanchéité sur la façade extérieure du bâtiment garantissant ainsi une étanchéité totale entre le dispositif et la façade, quelque soit le revêtement de ladite façade ou son état de surface.

Les deux conduits ainsi mis en place sont ensuite coupés à une longueur appropriée selon l'épaisseur de la façade du bâtiment e1, puis un ou plusieurs points de fixation sont réalisés par un opérateur depuis la partie intérieure du bâtiment permettant de rendre l'ensemble du système dispositif - conduits solidaire de la façade. Ces points de fixation peuvent être réalisés par tout outillage ordinairement utilisé pour fixer des conduits au mur, tel que par exemple des vis ou autres.

Bien entendu, la présente invention ne se limite pas à la forme de réalisation décrite ci-avant à titre d'exemple ; elle s'étend à d'autres variantes.

Ainsi, dans une variante possible de l'invention le dispositif comporte un organe d'étanchéité ayant une surface non circulaire.

En variante également, l'organe d'étanchéité 4 est totalement lisse. Dans ce cas, la présence d'un talon 5 dans le prolongement de l'organe d'étanchéité 4 est superflue et une ou plusieurs étape(s) supplémentaire(s) est (sont) à prévoir. Par exemple, il est possible de prévoir une étape de rappel du dispositif après insertion vers l'intérieur du bâtiment pour s'assurer du contact entre l'organe d'étanchéité et la façade.

L'organe d'étanchéité 4 et les moyens élastiques 3 peuvent en outre être réalisés dans tout matériau permettant d'assurer à la fois une élasticité suffisante pour permettre l'insertion du dispositif 1 dans l'orifice de passage et une rigidité satisfaisante pour réaliser l'étanchéité conduit - façade.

En particulier, selon le matériau utilisé, les moyens élastiques 3 peuvent être lisses.

En variante encore, le raccordement du dispositif au conduit est réalisé au moyen d'une bride de raccordement.

L'organe d'étanchéité, les moyens de raccordement et les moyens élastiques peuvent enfin être réalisés séparément puis ensuite assemblés les uns aux autres.

## Revendications

1. Procédé d'étanchéisation d'un orifice de passage de fluide d'une façade extérieure de bâtiment, ledit orifice étant réalisé entre une partie intérieure et une partie extérieure du bâtiment, le procédé comprenant au moins les étapes :
- prévoir un conduit tubulaire (20) portant sur une de ses extrémités un dispositif d'étanchéité (1), le dispositif comportant :
∘ un moyen de raccordement (2) au conduit, ledit moyen de raccordement s'étendant selon une direction longitudinale,
∘ un organe d'étanchéité (4),
∘ et des moyens élastiques (3) intermédiaires entre le moyen de raccordement (2) et l'organe d'étanchéité (4), les moyens élastiques prolongeant le moyen de raccordement selon ladite direction longitudinale, l'organe d'étanchéité (4) formant, dans une position de repos desdits moyens élastiques (3), un angle non nul avec un axe général du conduit,
- solliciter les moyens élastiques (3) pour déformer l'inclinaison de l'organe d'étanchéité (4) permettant une introduction de l'organe d'étanchéité (4) dans l'orifice,
- insérer dans ledit orifice, à partir de l'intérieur du bâtiment, le conduit (20) portant ledit dispositif d'étanchéité (1), l'organe d'étanchéité (4) étant incliné par rapport à sa position de repos pour progresser dans ledit orifice, et
- faire progresser le conduit portant le dispositif (1) dans l'orifice jusqu'à libérer hors de ladite partie extérieure du bâtiment l'organe d'étanchéité (4), les moyens élastiques (3) rabattant l'organe d'étanchéité dans sa position de repos et assurant un contact entre le dispositif et la façade extérieure.

2. Procédé d'étanchéisation selon la revendication 1, **caractérisé en ce que**, le dispositif (1) comportant un talon (5) situé dans le prolongement de l'organe d'étanchéité (4), le procédé comporte en outre une étape d'insertion d'un deuxième conduit (30) à l'intérieur dudit premier conduit, ledit deuxième conduit (30) étant apte à agir sur ledit talon (5) pour renforcer le contact entre le dispositif (1) et la façade extérieure.

3. Procédé d'étanchéisation selon la revendication 2 **caractérisé en ce que**, le deuxième conduit (30) comportant des moyens d'assemblage avec le dispositif, le procédé comporte en outre une étape de verrouillage du dispositif (1) par emboitement par complémentarité de forme du deuxième conduit (30) avec ledit talon (5) du dispositif.

4. Procédé d'étanchéisation selon la revendication 3, **caractérisé en ce qu'**une adaptation de la longueur du premier (20) et du second conduit (30) à l'épaisseur de la façade de bâtiment est réalisée après le verrouillage du deuxième conduit (30) et du talon (5).

5. Procédé d'étanchéisation selon l'une quelconque des revendications 1 à 4, **caractérisé en ce qu'**une étape de raccordement dudit dispositif au conduit (20) est effectuée par emmanchement du moyen de raccordement (2) autour du conduit.

6. Procédé selon l'une quelconque des revendications 1 à 5, **caractérisé en ce qu'**il comporte une étape finale de fixation du conduit et du dispositif d'étanchéité (1) à l'intérieur de l'orifice de passage réalisée à l'intérieur du bâtiment par l'intermédiaire de moyens de fixation.

7. Dispositif pour une étanchéisation d'un orifice de passage de fluide d'une façade extérieure de bâtiment, le dispositif comprenant
∘ un moyen de raccordement (2) à un conduit, ledit moyen de raccordement s'étendant selon une direction longitudinale,
∘ un organe d'étanchéité (4),
∘ et des moyens élastiques (3) intermédiaires entre le moyen de raccordement (2) et l'organe d'étanchéité (4), les moyens élastiques prolongeant le moyen de raccordement selon ladite direction longitudinale, l'organe d'étanchéité formant, dans une position de repos desdits moyens élastiques (3), un angle non nul avec un axe général du conduit,
les moyens élastiques (3) étant aptes à être sollicités pour déformer l'inclinaison de l'organe d'étanchéité (4) en permettant une introduction de l'organe d'étanchéité (4) dans l'orifice,
de sorte que le conduit (20) portant ledit dispositif d'étanchéité (1) est apte à être inséré dans ledit orifice, à partir de l'intérieur du bâtiment, l'organe d'étanchéité (4) étant incliné par rapport à sa position de repos pour progresser dans ledit orifice, et
de sorte que le conduit portant le dispositif (1) est apte à progresser dans l'orifice jusqu'à libérer hors de ladite partie extérieure du bâtiment l'organe d'étanchéité (4), les moyens élastiques (3) rabattant l'organe d'étanchéité dans sa position de repos et assurant un contact entre le dispositif et la façade extérieure.

8. Dispositif selon la revendication 7, **caractérisé en ce que** ledit dispositif (1) est de section générale tubulaire, avec une partie intérieure orientée vers l'axe général du dispositif, et l'organe d'étanchéité (4) possède une surface circulaire sensiblement plane s'étendant dans une direction formant un angle non nul avec un axe général du conduit de raccordement (20) à l'opposée de la partie intérieure du dispositif.

9. Dispositif selon la revendication 8, **caractérisé en ce qu'**il comporte un talon (5) situé dans le prolongement de l'organe d'étanchéité sur une partie intérieure dudit dispositif.

10. Dispositif d'étanchéisation selon l'une quelconque des revendications 7 à 9, **caractérisé en ce que** l'organe d'étanchéité (4) et les moyens élastiques (3) sont réalisés dans un matériau souple de type polymère d'une dureté comprise entre 40 et 80 Shore A, de préférence entre 50 et 70 Shore A.

11. Dispositif d'étanchéisation selon l'une quelconque des revendications 7 à 10, **caractérisé en ce que** les moyens élastiques (3) comportent sur au moins une surface des cannelures de déformation.

12. Dispositif selon l'une quelconque des revendications 7 à 11, **caractérisé en ce que** l'organe d'étanchéité (4) est muni sur une partie périphérique extérieure de sa surface circulaire plane d'une saillie périphérique de contact (6) avec la façade extérieure de bâtiment.

13. Dispositif selon l'une quelconque des revendications 7 à 12, **caractérisé en ce que** le moyen de raccordement (2) au conduit (20) est de forme circulaire en un matériau élastique pour venir s'emmancher autour d'un conduit tubulaire.

14. Dispositif selon l'une quelconque des revendications 7 à 13, **caractérisé en ce que** l'organe d'étanchéité (4), les moyens de raccordement (2) et les moyens élastiques (3) intermédiaires forment une seule et même pièce.

15. Système pour une étanchéisation d'un orifice de passage de fluide d'une façade extérieure de bâtiment, **caractérisé en ce qu'**il comporte :
- un dispositif d'étanchéisation (1) selon l'une quelconque des revendications 7 à 14, et
- un premier conduit raccordé au dispositif d'étanchéisation par l'intermédiaire de moyens de raccordement.

16. Système selon la revendication 15, **caractérisé en ce qu'**il comporte en outre un deuxième conduit inséré à l'intérieur dudit premier conduit pour agir sur le talon d'un dispositif d'étanchéisation selon la revendication 9.

## Patentansprüche

1. Abdichtverfahren für eine Fluid-Durchgangsöffnung einer Außenfassade eines Gebäudes, wobei die Öffnung zwischen einem inneren Teil und einem äußeren Teil des Gebäudes ausgeführt ist/wird;
wobei das Verfahren wenigstens die Schritte umfasst:
- Vorsehen einer rohrförmigen Leitung (20), die an einem ihrer Enden eine Dichtvorrichtung (1) trägt, wobei die Vorrichtung umfasst:
• ein Verbindungsmittel (2) zur Verbindung mit der Leitung, wobei das Verbindungsmittel sich entlang einer Längsrichtung erstreckt,
• ein Dichtelement (4),
• und zwischengeschaltete elastische Mittel (3) zwischen dem Verbindungsmittel (2) und dem Dichtelement (4), wobei die elastischen Mittel das Verbindungsmittel entlang der Längsrichtung verlängern, wobei das Dichtelement (4) in einer Ruheposition der elastischen Mittel (3) einen von Null verschiedenen Winkel mit einer allgemeinen Achse der Leitung bildet,
- Beanspruchen der elastischen Mittel (3), um die Neigung des Dichtelements (4) zu verformen, wodurch ein Einführen des Dichtelements (4) in die Öffnung ermöglicht wird;
- Einsetzen der die Dichtvorrichtung (1) tragenden Leitung (20) in die Öffnung, ausgehend von dem Inneren des Gebäudes, wobei das Dichtelement (4) in Bezug auf seine Ruheposition geneigt ist, um in der Öffnung voranzukommen, und
- Vorbewegen der die Vorrichtung (1) tragenden Leitung in der Öffnung, bis sich das Dichtelement (4) von dem äußeren Teil des Gebäudes löst, wobei die elastischen Mittel (3) das Dichtelement in seine Ruheposition klappen und einen Kontakt zwischen der Vorrichtung und der Außenfassade sicherstellen.

2. Abdichtverfahren nach Anspruch 1, **dadurch gekennzeichnet, dass** die Vorrichtung (1) einen Fersenabschnitt (5) umfasst, der sich in der Verlängerung des Dichtelements (4) befindet, wobei das Verfahren ferner einen Schritt des Einsetzens einer zweiten Leitung (30) in das Innere der ersten Leitung umfasst, wobei die zweite Leitung (30) dazu geeignet ist, auf den Fersenabschnitt (5) einzuwirken, um den Kontakt zwischen der Vorrichtung (1) und der Außenfassade zu verstärken.

3. Abdichtverfahren nach Anspruch 2, **dadurch gekennzeichnet, dass** die zweite Leitung (30) Montagemittel zum Zusammensetzen mit der Vorrichtung umfasst, wobei das Verfahren ferner einen Schritt des Verriegelns der Vorrichtung (1) durch formschlüssiges Ineinandergreifen der zweiten Leitung (30) mit dem Fersenabschnitt (5) der Vorrichtung umfasst.

4. Abdichtverfahren nach Anspruch 3, **dadurch gekennzeichnet, dass** nach dem Verriegeln der zweiten Leitung (30) und des Fersenabschnitts (5) eine Anpassung der Länge der ersten (20) und der zweiten Leitung (30) an die Dicke der Gebäudefassade durchgeführt wird.

5. Abdichtverfahren nach einem der Ansprüche 1 bis 4, **gekennzeichnet dadurch, dass** ein Schritt des Verbindens der Vorrichtung mit der Leitung (20) durchgeführt wird, indem das Verbindungsmittel (2) um die Leitung herum aufgebracht wird.

6. Verfahren nach einem der Ansprüche 1 bis 5, **gekennzeichnet dadurch, dass** es einen letzten Schritt der Befestigung der Leitung und der Dichtvorrichtung (1) im Inneren der Durchgangsöffnung umfasst, durchgeführt im Inneren des Gebäudes mit Hilfe von Befestigungsmitteln.

7. Vorrichtung zum Abdichten einer Fluiddurchgangsöffnung einer Außenfassade eines Gebäudes, wobei die Vorrichtung umfasst
∘ ein Verbindungsmittel (2) zur Verbindung mit einer Leitung, wobei das Verbindungsmittel sich entlang einer Längsrichtung erstreckt,
∘ ein Dichtelement (4),
∘ und zwischengeschaltete elastische Mittel (3) zwischen dem Verbindungsmittel (2) und dem Dichtelement (4), wobei die elastischen Mittel das Verbindungsmittel entlang der Längsrichtung verlängern, wobei das Dichtelement in einer Ruheposition der elastischen Mittel (3) einen von Null verschiedenen Winkel mit einer allgemeinen Achse der Leitung bildet,
wobei die elastischen Mittel (3) dazu geeignet sind, beansprucht zu werden, um die Neigung des Dichtelements (4) zu verformen, wobei ein Einführen des Dichtelements (4) in die Öffnung ermöglicht wird,
so dass die die Dichtvorrichtung (1) tragende Leitung (20) dazu geeignet ist, in die Öffnung eingesetzt zu werden, ausgehend von dem Inneren des Gebäudes, wobei das Dichtelement (4) in Bezug auf seine Ruheposition geneigt ist, um in der Öffnung voranzukommen, und
so dass die die Vorrichtung (1) tragende Leitung dazu geeignet ist, sich in der Öffnung vorzubewegen, bis sich das Dichtelement (4) von dem äußeren Teil des Gebäudes löst, wobei die elastischen Mittel (3) das Dichtelement in seine Ruheposition klappen und einen Kontakt zwischen der Vorrichtung und der Außenfassade sicherstellen.

8. Vorrichtung nach Anspruch 7, **dadurch gekennzeichnet, dass** die Vorrichtung (1) einen allgemein röhrenförmigen Querschnitt aufweist, wobei ein innerer Teil zur allgemeinen Achse der Vorrichtung orientiert ist, und das Dichtelement (4) eine kreisförmige, im Wesentlichen planare Oberfläche aufweist, die sich in einer Richtung erstreckt, die einen von Null verschiedenen Winkel mit einer allgemeinen Achse der Verbindungsleitung (20) gegenüber dem inneren Teil der Vorrichtung bildet.

9. Vorrichtung nach Anspruch 8, **dadurch gekennzeichnet, dass** sie einen Fersenabschnitt (5) umfasst, der sich in der Verlängerung des Dichtelements an einem inneren Teil der Vorrichtung befindet.

10. Dichtvorrichtung nach einem der Ansprüche 7 bis 9, **dadurch gekennzeichnet, dass** das Dichtelement (4) und die elastischen Mittel (3) aus einem flexiblen Material vom Polymer-Typ mit einer Härte zwischen 40 und 80 Shore A bestehen, vorzugsweise zwischen 50 und 70 Shore A.

11. Dichtvorrichtung nach einem der Ansprüche 7 bis 10, **dadurch gekennzeichnet, dass** die elastischen Mittel (3) an mindestens einer Oberfläche Verformungsrillen aufweisen.

12. Vorrichtung nach einem der Ansprüche 7 bis 11, **gekennzeichnet dadurch, dass** das Dichtelement (4) an einem äußeren Umfangsabschnitt seiner planaren kreisförmigen Oberfläche mit einem Kontakt-Umfangsvorsprung (6) zum Kontakt mit der Außenfassade des Gebäudes versehen ist.

13. Vorrichtung nach einem der Ansprüche 7 bis 12 **dadurch gekennzeichnet, dass** das Verbindungsmittel (2) zur Verbindung mit der Leitung (20) kreisförmig ist und aus einem elastischen Material besteht, so dass es um eine rohrförmige Leitung herum aufgebracht werden kann.

14. Vorrichtung nach einem der Ansprüche 7 bis 13 **dadurch gekennzeichnet, dass** das Dichtelement (4), die Verbindungsmittel (2) und die zwischengeschalteten elastischen Mittel (3) ein und dasselbe Bauteil bilden.

15. System zum Abdichten einer Fluiddurchgangsöffnung einer Außenfassade eines Gebäudes, **dadurch gekennzeichnet, dass** es umfasst:
- eine Dichtvorrichtung (1) nach einem der Ansprüche 7 bis 14 und
- eine erste Leitung, die mit Hilfe von Verbindungsmitteln mit der Dichtvorrichtung verbunden ist.

16. System nach Anspruch 15, **dadurch gekennzeichnet, dass** es ferner eine zweite Leitung umfasst, welche in das Innere der ersten Leitung eingeführt ist, um auf den Fersenabschnitt einer Dichtvorrichtung nach Anspruch 9 zu wirken.

## Claims

1. A method for sealing a fluid passage orifice of an outer facade of a building, said orifice being made between an inner portion and an outer portion of the building,
the method comprising at least the steps of:
- providing a tubular conduit (20) carrying on one of the ends thereof a sealing device (1), the device including:
∘ means (2) for coupling to the conduit, said coupling means extending in a longitudinal direction,
∘ a sealing member (4),
∘ and intermediate elastic means (3) between the coupling means (2) and the sealing member (4), the elastic means extending the coupling means along said longitudinal direction, the sealing member (4) forming, in a rest position of said elastic means (3), a non-zero angle with a general axis of the conduit,
- biasing the elastic means (3) to deform the inclination of the sealing member (4) allowing an insertion of the sealing member (4) into the orifice,
- inserting into said orifice, from the inside of the building, the conduit (20) carrying said sealing device (1), the sealing member (4) being inclined relative to its rest position in order to progress in said orifice, and
- progressing the conduit carrying the device (1) in the orifice until the sealing member (4) is released out of said outer portion of the building; the elastic means (3) folding back the sealing member to its rest position and ensuring a contact between the device and the outer facade.

2. The sealing method according to claim 1, **characterised in that**, the device (1) including a heel (5) located in the extension of the sealing member (4), the method further includes a step of inserting a second conduit (30) inside said first conduit, said second conduit (30) being capable of acting on said heel (5) to reinforce the contact between the device (1) and the outer facade.

3. The sealing method according to claim 2, **characterised in that**, the second conduit (30) including means of assembly with the device, the method further includes a step of locking the device (1) by form-fitting interlocking of the second conduit (30) with said heel (5) of the device.

4. The sealing method according to claim 3, **characterised in that** an adaptation of the length of the first (20) and second (30) conduit to the thickness of the building facade is carried out after locking the second conduit (30) and the heel (5).

5. The sealing method according to any one of claims 1 to 4, **characterised in that** a step of coupling said device to the conduit (20) is performed by fitting the coupling means (2) around the conduit.

6. The method according to any one of claims 1 to 5, **characterised in that** it includes a final step of fastening the conduit and the sealing device (1) inside the passage orifice carried out inside the building via fastening means.

7. A device for sealing a fluid passage orifice of an outer facade of a building, the device comprising
o means (2) for coupling to a conduit, said coupling means extending in a longitudinal direction,
∘ a sealing member (4),
∘ and intermediate elastic means (3) between the coupling means (2) and the sealing member (4), the elastic means extending the coupling means in said longitudinal direction, the sealing member forming, in a rest position of said elastic means (3), a non-zero angle with a general axis of the conduit,
the elastic means (3) being capable of being biased to deform the inclination of the sealing member (4) by allowing an insertion of the sealing member (4) into the orifice, such that the conduit (20) carrying said sealing device (1) is capable of being inserted into said orifice, from the inside of the building, the sealing member (4) being inclined relative to its rest position to progress in said orifice, and
such that the conduit carrying the device (1) is capable of progress in the orifice until the sealing member (4) is released out of said outer portion of the building; the elastic means (3) folding back the sealing member to its rest position and ensuring a contact between the device and the outer facade.

8. A device according to claim 7, **characterised in that** said device (1) is of a generally tubular section, with an inner portion oriented towards the general axis of the device, and the sealing member (4) has a substantially planar circular surface extending in a direction forming a non-zero angle with a general axis of the coupling conduit (20) opposite to the inner portion of the device.

9. The device according to claim 8, **characterised in that** it includes a heel (5) located in the extension of the sealing member on an inner portion of said device.

10. The sealing device according to any one of claims 7 to 9, **characterised in that** the sealing member (4) and the elastic means (3) are made of a polymer-type flexible material having a hardness comprised between 40 and 80 Shore A, preferably between 50 and 70 Shore A.

11. The sealing device according to any one of claims 7 to 10, **characterised in that** the elastic means (3) include, on at least one surface, deformation flutes.

12. The device according to any one of claims 7 to 11, **characterised in that** the sealing member (4) is provided on an outer peripheral portion of the flat circular surface thereof with a peripheral protrusion (6) of contact with the outer facade of a building.

13. The device according to any one of claims 7 to 12, **characterised in that** the means (2) for coupling to the conduit (20) is circular in shape which is made of an elastic material to fit around a tubular conduit.

14. The device according to any one of claims 7 to 13, **characterised in that** the sealing member (4), the coupling means (2) and the intermediate elastic means (3) form one and the same piece.

15. A system for sealing a fluid passage orifice of an outer facade of a building, **characterised in that** it includes:
- a sealing device (1) according to any one of claims 7 to 14, and
- a first conduit coupled to the sealing device via coupling means.

16. The system according to claim 15, **characterised in that** it further includes a second conduit inserted inside said first conduit to act on the heel of a sealing device according to claim 9.
